(19) Europäisches Patentamt

European Patent Office

Office européen des brevets

(11) Veröffentlichungsnummer: **0 224 041**

**A1**

## (12) EUROPÄISCHE PATENTANMELDUNG

(21) Anmeldenummer: 86114716.3

(22) Anmeldetag: 23.10.86

(51) Int. Cl.4: **A47J 31/56 , A47J 31/057**

(30) Priorität: 02.11.85 DE 3539007

(43) Veröffentlichungstag der Anmeldung:
03.06.87 Patentblatt 87/23

(84) Benannte Vertragsstaaten:
AT BE CH DE ES FR GB GR IT LI LU NL SE

(71) Anmelder: **Rheinisch-Westfälisches Elektrizitätswerk Aktiengesellschaft Kruppstrasse 5 D-4300 Essen 1(DE)**

(72) Erfinder: **Kalischer, Peter, Dipl.-Ing. Mendener Strasse 22 D-4330 Mülheim(DE)**
Erfinder: **Klonka, Uwe, Dipl.-Ing. Wilhelm-Bernsau-Weg 2 D-4300 Essen 16(DE)**
Erfinder: **Stoy, Bernd, Dr.-Ing. Scharfenstein 6 D-4030 Ratingen 8(DE)**
Erfinder: **Pöhlmann, Erich Wilhelm-Meussdoerffer-Strasse 8a D-8650 Kulmbach(DE)**

(74) Vertreter: **Andrejewski, Walter et al Patentanwälte Dipl.-Phys. Dr. Walter Andrejewski Dipl.-Ing. Dr.-Ing. Manfred Honke Dipl.-Phys. Dr. Karl Gerhard Masch Theaterplatz 3, Postfach 10 02 54 D-4300 Essen 1(DE)**

(54) **Heissgetränkebereiter für Haushalte und für gewerbliche Zwecke.**

(57) Heißgetränkebereiter für Haushalte und gewerbliche Zwecke mit Kaffeezubereitungseinrichtung (1), Teezubereitungseinrichtung (2), an das Brauchwasser angeschlossenem Wasserspeicher (3), elektrischer Heizvorrichtung (11) und Steuer-sowie Regeleinrichtung (5). Der Wasserspeicher ist über eine Verteilerleitung (6) und jeweils eine Abzweigleitung mit der Kaffeezubereitungseinrichtung bzw. der Teezubereitungseinrichtung sowie ggf. mit zusätzlichen Zapfstellen für Heißwasser und Dampf verbunden. Der Wasserspeicher (3) ist als Kaltwasserspeicher mit Füllstandsregelung ausgeführt. Die Abzweigleitungen kommunizieren mit dem Kaltwasserspeicher. In die Abzweigleitungen ist über ein Rückschlagventil (9) im Kommunikationsbereich jeweils eine Durchlaufheizvorrichtung (11) eingebaut, die als Dampfblasenpumpe ausgebildet ist. Die Kaffeezubereitungseinrichtung sowie die Teezubereitungseinrichtung sind über einen Saugheber mit Dosiervolumen und Schwallentleerung an ihre Abzweigleitung angeschlossen.

## Heißgetränkebereiter für Haushalte und gewerbliche Zwecke

Die Erfindung bezieht sich gattungsgemäß auf einen Heißgetränkebereiter für Haushalte und für gewerbliche Zwecke mit Kaffeezubereitungseinrichtung, Teezubereitungseinrichtung, an das Brauchwassernetz angeschlossenem Wasserspeicher, elektrischer Heizvorrichtung und Steuer-sowie Regeleinrichtung, wobei der Wasserspeicher über eine Verteilerleitung und jeweils eine Abzweigleitung mit der Kaffeezubereitungseinrichtung bzw. der Teezubereitungseinrichtung sowie ggf. mit zusätzlichen Zapfstellen für Heißwasser und Dampf verbunden sind. -Der Ausdruck Kaffeezubereitungseinrichtung umfaßt auch solche für die Zubereitung von Espressokaffee.

Bei dem (aus der Praxis) bekannten gattungsgemäßen Heißgetränkebereiter der angegebenen Mehrfachfunktion ist der Wasserspeicher ein Heißwasserspeicher, dessen Wasser durch die elektrische Heizvorrichtung beheizbar ist. Der Heißwasserspeicher ist ein Druckbehälter und entsprechend ausgelegt, gesichert und gesteuert bzw. geregelt. Die elektrische Heizvorrichtung weist Heizschlangen auf, die in dem Heißwasserspeicher angeordnet sind. Das Heißwasser gelangt durch Wasser-oder Dampfdruck über die Verteilerleitung und die Abzweigleitungen zu der Kaffeezubereitungseinrichtung bzw. der Teezubereitungseinrichtung, und zwar im kontinuierlichen Auslauf über entsprechende Steuerventile für die Mengensteuerung. Die Steuereinrichtung bewirkt die Steuerung und die Dosierung. Das alles ist apparativ und steuerungstechnisch verhältnismäßig aufwendig und beschränkt den Einsatz der bekannten gattungsgemäßen Heißgetränkebereiter auf gewerbliche Zwecke. Für Haushalte fehlt ein Heißgetränkebereiter der angegebenen Mehrfachfunktion.

Der Erfindung liegt die Aufgabe zugrunde, einen gattungsgemäßen Heißgetränkebereiter zu - schaffen, der sich durch geringen apparati ven und steuerungstechnischen Aufwand auszeichnet und daher sowohl für gewerbliche Zwecke als auch für Haushaltszwecke geeignet ist.

Zur Lösung dieser Aufgabe lehrt die Erfindung, daß der Wasserspeicher als offener Kaltwasserspeicher mit Füllstandsregelung ausgeführt ist, daß die Abzweigleitungen mit dem Kaltwasserspeicher kommunizieren und in die Abzweigleitungen über ein Rückschlagventil im Kommunikationsbereich jeweils eine Durchlaufheizvorrichtung eingebaut ist, die als Dampfblasenpumpe ausgebildet ist, und daß die Kaffeezubereitungseinrichtung sowie die Teezubereitungseinrichtung über einen Saugheber mit Dosiervolumen und Schwallentleerung an ihre Abzweigleitung angeschlossen sind. Eine Schwallentleerung kann auch elektromagnetisch durch eine Ablaufeinrichtung realisiert werden. Die Anordnung eines offenen Kaltwasserspeichers mit angeschlossenem U-Rohr und in einem U-Schenkel angeordnetem Durchlauferhitzer ist an sich bekannt - (DE-AS 26 35 047). Die Erfindung beruht auf der Erkenntnis, daß bei Einsatz von Durchlaufheizvorrichtungen und Rückschlagventilen in den Abzweigleitungen auch bei einem Heißgetränkebereiter der angegebenen Mehrfachfunktion nicht nur auf einen als Druckbehälter ausgeführten Heißwasserspeicher mit seinen Zusatzeinrichtungen verzichtet, sondern außerdem die Steuerung vereinfacht werden kann, wenn in der beschriebenen Weise das Gesetz der kommunizierenden Gefäße ausgenutzt wird und Saugheber für die Dosierung eingesetzt werden.

Im einzelnen bestehen im Rahmen der Erfindung mehrere Möglichkeiten der weiteren Ausbildung und Gestaltung. So kann der Kaltwasserspeicher eine Schwimmer-Füllstandsregelung sowie ein vorgeschaltetes Brauchwasseraufbereitungsfilter aufweisen. Die Durchlaufheizvorrichtungen sind zweckmäßigerweise nach Maßgabe der Absicherung elektrisch gegeneinander verriegelt und nicht alle gleichzeitig einschaltbar.

An den Saugheber der Kaffeezubereitungseinrichtung ist ein Kaffeefilterkammer oder ein entsprechendes Aggregat für die Zubereitung von Espressokaffee angeschlossen. Es kann aber auch neben der Kaffeezubereitungseinrichtung für einfachen Kaffee eine Kaffeezubereitungseinrichtung für Espressokaffee angeordnet sein. An den Saugheber der Teezubereitungseinrichtung ist eine Teebrühkammer mit zeitsteuerbarer Ablaufeinrichtung angeschlossen. Es versteht sich, daß die Kaffeezubereitungseinrichtung sowie die Teezubereitungseinrichtung mit einer Heizplatte zum Aufstellen einer Tee-oder Kaffeekanne ausgerüstet sein kann.

Im folgenden wird die Erfindung anhand einer lediglich ein Ausführungsbeispiel darstellenden Zeichnung ausführlicher erläutert.

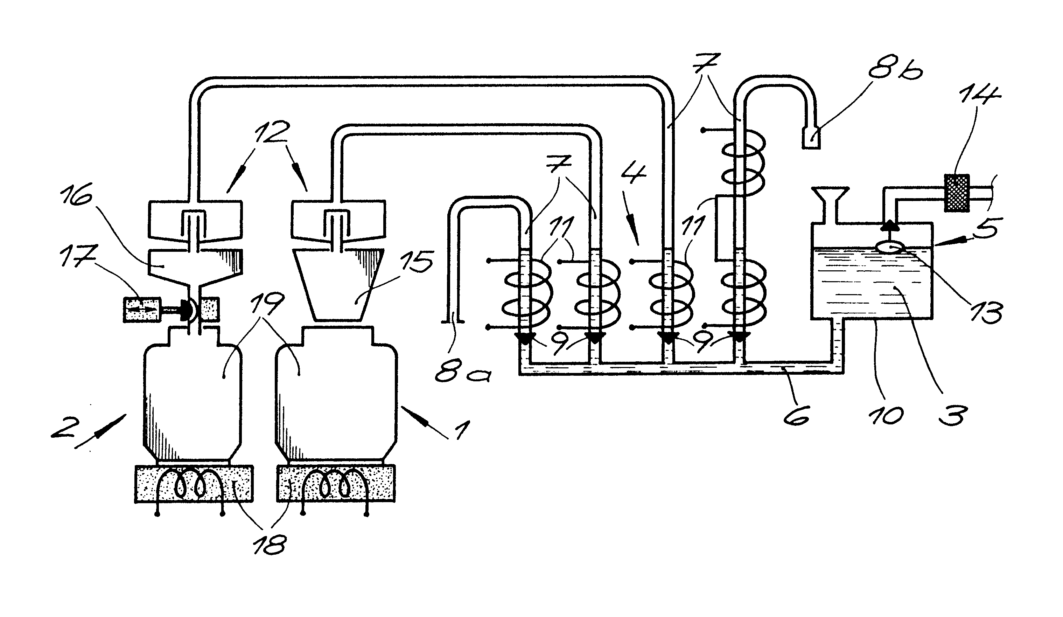

Die einzige Figur zeigt das Schema eines erfindungsgemäßen Heißgetränkebereiters.

Der in der Figur dargestellte Heißgetränkebereiter ist für Haushalte und für gewerbliche Zwecke bestimmt. Zum grundsätzlichen Aufbau gehören

eine Kaffeezubereitungseinrichtung 1,

eine Teezubereitungseinrichtung 2,

ein an das Brauchwassernetz angeschlossener Wasserspeicher 3,

eine elektrische Heizvorrichtung 4 und

eine Steuer-und Regeleinrichtung 5.

Der Wasserspeicher 3 ist über eine Verteilerleitung 6 und jeweils eine Abzweigleitung 7 mit der Kaffeezubereitungseinrichtung 1 bzw. der Teezubereitungseinrichtung 2 sowie ggf. mit zusätzlichen Zapfstellen 8 für Heißwasser und Dampf verbunden. Der Wasserspeicher 3 ist als Kaltwasserspeicher mit Füllstandsregelung ausgeführt. Die Anordnung ist so getroffen, daß die Abzweigleitungen 7 mit dem Kaltwasserspeicher 3 kommunizieren, und zwar so, wie es aus der Zeichnung entnehmbar ist. Bei 8a kann Heißwasser, bei 8b kann Dampf entnommen werden. Fernerhin sind in die Abzweigleitungen 7 über ein Rückschlagventil 9 im Kommunikationsbereich, welches etwa in Höhe des Bodens 10 des Wasserspeichers 3 angeordnet ist, jeweils eine Durchlaufheizvorrichtung 11 eingebaut. Die Durchlaufheizvorrichtung 11 arbeitet als Dampfblasenpumpe und ist entsprechend ausgebildet. Die Kaffeezubereitungseinrichtung 1 sowie die Teezubereitungseinrichtung 2 sind über einen Saugheber 12 mit Dosiervolumen und Schwallentleerung an ihrer Abzweigleitung 7 angeschlossen. Der Kaltwasserspeicher 3 besitzt eine Schwimmer-Füllstandsregelung 13 sowie ein vorgeschaltetes Brauchwasseraufbereitungsfilter 14. Die Durchlaufheizvorrichtungen 11 können elektrisch zum Teil gegeneinander verriegelt sein und sind dann nicht alle gleichzeitig schaltbar, was aus dem Schema nicht zu entnehmen ist, jedoch zu üblichen - schaltungstechnischen Maßnahmen der Elektrotechnik gehört.

An den Saugheber 12 der Kaffeezubereitungseinrichtung 1 ist eine Kaffeefilterkammer 15 angeschlossen. An den Saugheber 12 der Teezubereitungseinrichtung 2 ist eine Teebrühkammer 16 mit zeitsteuerbarer Ablaufeinrichtung 17 angeschlossen. Es versteht sich, daß die Kaffeefilterkammer 15 sowie die Teebrühkammer 16 gegeinander austauschbar sind. Die Kaffeezubereitungseinrichtung 1 sowie die Teezubereitungseinrichtung 2 besitzen jeweils eine Heizplatte 18 zum Aufstellen bzw. Warmhalten einer Tee-oder Kaffeekanne 19.

Die beschriebenen Aggregate bestimmen auch die Funktion des dargestellten Heißgetränkebereiters. Sie ist gekennzeichnet durch
die Saugheber 12, die das Brühwasser schwallartig dem Kaffeefilter 15 bzw. der Brühkammer 16 zuführen,
eine Dosierautomatik, die das Volumen der Saugheber 12 gleichzeitig als Dosiervolumen nutzt, wobei die Anzahl der schwallartigen Entleerungen ein Maß des Istwertes der Dosierautomatik für die Anzahl Tassen ist und wobei die Meßwerterfassung z.B. über Temperaturfühler am Auslauf, oder über den elektrischen Widerstand des Wassers am Auslauf und mittels Impulszähler erfolgt,
eine Dosierautomatik, die für die Anzahl Tassen eine Zeitschaltung verwendet.

Im Bereich des Kaltwasserspeichers 3 befindet sich im Ausführungsbeispiel ein Wasseraufbereitungsfilter 14. Solche sind handelsüblich und arbeiten z. B. mit Aktivkohle. Sie verbessern die Wasserqualität. Insbesondere absorbieren sie Chlor und andere Fremdstoffe. Im Ergebnis kann ein in qualitativer Hinsicht allen Anforderungen genügendes Heißgetränk erzeugt werden. Ein Wasseraufbereitungsfilter könnte auch oder zusätzlich im Auslauf 6 des Kaltwasserspeichers 3 angeordnet sein. Auf diese Weise kann auch bei längeren Stillstandszeiten das im Kaltwasserspeicher 3 gespeicherte Wasser wieder verbessert werden. Bei längeren Stillstandszeiten des Heißgetränkebereiters verschlechtert sich die Wasserqualität im Wasserspeicher. Das könnte den Kaffee-oder Teegeschmack beeinträchtigen. Durch ein von Hand oder automatisch betätigtes Ablaufventil, welches an das Abwassersystem angeschlossen aber nicht gezeichnet ist, kann dieses verhindert werden.

Verschiedene Teesorten, gewünschter Teegeschmack und gewünschte Teewirkung bringen unterschiedliche Brühdauer. Dazu ist bei der Ausführungsform nach dem Ausführungsbeispiel die Ablaufeinrichtung 17 der Teebrühkammer 16 der Teezubereitungseinrichtung 2 mit einem hochelastischen Schlauch versehen, der mit einem federbelasteten Metallstift zusammengeklemmt und abgedichtet ist. Der Metallstift endet in einem Elektromagneten, der nach vorgewählter Brühzeit den Metallstift einzieht und das Brühwasser in die Kanne laufen läßt. Die Teebrühkammer hat das Volumen einer oder mehrerer Tassen. Werden mehr Tassen benötigt, so kann man die restlichen Tassen als Kochendwasser aus 8 direkt in die Kanne leiten, den Tee also verdünnen. Der Auslauf 6 kann mit einem Ventil zur Entleerung des Systems versehen sein, um einen Wasseraustausch, insbes. nach längeren Stillstandszeiten, zu ermöglichen.

**Ansprüche**

1. Heißgetränkebereiter für Haushalte und für gewerbliche Zwecke mit
Kaffeezubereitungseinrichtung,
Teezubereitungseinrichtung,
an das Brauchwassernetz angeschlossenem Wasserspeicher,
elektrischer Heizvorrichtung und
`Steuer-sowie Regeleinrichtung,
wobei der Wasserspeicher über ein Verteilerleitung und jeweils eine Abzweigleitung mit der Kaffeezubereitungseinrichtung bzw. der Teezubereitungseinrichtung sowie ggf. mit zusätzlichen Zapfstellen für Heißwasser und Dampf verbunden ist, **dadurch gekennzeichnet,** daß der Wasserspeicher als offener Kaltwasserspeicher (3) mit Füllstandsregelung ausgeführt ist,
daß die Abzweigleitungen (7) mit dem Kaltwasserspeicher (3) kommunizieren und in die Abzweigleitungen (7) über ein Rückschlagventil (9) im Kommunikationsbereich jeweils eine Durchlaufheizvorrichtung (11) eingebaut ist, die als Dampfblasenpumpe ausgebildet ist,
und daß die Kaffeezubereitungseinrichtung (1) sowie die Teezubereitungseinrichtung (2) über einen Saugheber (12) mit Dosiervolumen und Schwallentleerung an ihre Abzweigleitung (7) angeschlossen sind.

2. Heißgetränkebereiter nach Anspruch 1, dadurch gekennzeichnet, daß der Kaltwasserspeicher (3) eine Schwimmer-Füllstandsregelung (13) sowie ein vorgeschaltetes Brauchwasseraufbereitungsfilter (14) aufweist.

3. Heißgetränkebereiter nach einem der Ansprüche 1 bis 2, dadurch gekennzeichnet, daß an den Saugheber (12) der Kaffeezubereitungseinrichtung (1) eine Kaffeefilterkammer (15) angeschlossen ist.

4. Heißgetränkebereiter nach einem der Ansprüche 1 bis 2, dadurch gekennzeichnet, daß an den Saugheber (12) der Teezubereitungseinrichtung (2) eine Teebrühkammer (16) mit zeitsteuerbarer Ablaufeinrichtung (17) angeschlossen ist.

0 224 041

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| Y | CH-A- 255 368 (GERTSCH) <br> * Insgesamt * | 1 | A 47 J 31/56 <br> A 47 J 31/057 |
| A | | 2 | |
| | --- | | |
| Y | US-A-3 371 593 (PRICE) <br> * Insgesamt * | 1 | |
| A | | 3 | |
| | --- | | |
| A | DE-A-2 428 165 (SÜDDEUTSCHE METALLWERKE) <br> * Insgesamt * | 4 | |
| | --- | | |
| A | DE-U-8 407 569 (BUNTROCK) <br> * Insgesamt * | 1 | RECHERCHIERTE SACHGEBIETE (Int. Cl.4) |
| | --- | | |
| A | CH-A- 452 147 (HUGENTOBLER) <br> * Insgesamt * | 1,2 | A 47 J |
| | --- | | |
| D,A | DE-A-2 635 047 (MELITTA) | | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 06-02-1987 | SCHARTZ J. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82